# EUROPEAN PATENT APPLICATION

(11) **EP 3 154 254 A1**
(43) Date of publication of application: **12.04.2017**
(21) Application number: 14873110.2
(22) Date of filing: 02.09.2014
(51) Int. Cl.: H04N 5/232

(54) **PROCESSING METHOD AND SYSTEM FOR AUTOMATIC PHOTOGRAPHING BASED ON EYEBALL TRACKING TECHNIQUE**

(30) Priority: 05.06.2014 CN 201410246351
(71) Applicant: Huizhou TCL Mobile Communication Co., Ltd., Huizhou, Guangdong 516006 (CN)
(72) Inventor: GAO, Ke, HuiZhou Guangdong 516006 (CN)
(74) Representative: Petraz, Gilberto Luigi
(86) International application number: PCT/CN2014/085780
(87) International publication number: WO 2015/184693

(57) **Abstract**

A processing method and system for automatically photographing based on eyeball tracking technology are disclosed. When an automatic photographing is executed, it is detected whether eyes of a photographed person have been looking at a camera. Then, the camera focuses on a range in which the eyes serve target points and executes automatically photographing in a preset countdown. The present disclosure automatically focuses and photographs by utilizing the eyeball tracking technology, such that an automatic photographing is fast and convenient.

## Description

### BACKGROUND OF THE INVENTION

### 1. Field of the Invention

The present invention generally relates to a field of consumer electronics, and more particularly to a processing method and a system for automatically photographing based on eyeball tracking technology.

### 2. Description of Prior Art

With the development of electronic techniques and the constant increasing of people's living standards, various types of mobile terminals, such as cell phones, are more and more popular. Cell phones have become indispensable communication tools in people's lives.

Currently, a photographing function of a cell phone is frequently utilized. An automatic photographing function of the cell phone is popular among young people, especially young women. However, when an automatic photographing operation is performed with a rear camera of the cell phone, the automatic photographing operation is not convenient and thus the photographing effect is significantly affected. Compared with the rear camera, a front camera is conveniently operated, but the pixel configuration of the front camera is usually worse than the pixel configuration of the rear camera. Moreover, utilizing the front camera to photograph automatically is not convenient for a large screen cell phone. Utilizing the rear camera to photograph automatically is not easy to focus on a user and thus not convenient for the user.

Consequently, the prior art needs to be improved and developed.

### DISCLOSURE OF THE INVENTION

### Technical Problems

The present invention aims to solve technical problems that the above-mentioned deficiencies exist in the prior art by providing a processing method and system for automatically photographing based on eyeball tracking technology. A mobile terminal can focus and photograph automatically with a front and/or rear cameras and provide convenience for a user.

### Solutions to the Problems

### Technological Solutions

A processing method for automatically photographing based on eyeball tracking technology comprises:

Newly adding a menu item of an automatic photographing function for initiating an eyeball tracking function and a menu item of an automatic photographing countdown setting for setting an autodyne countdown in a camera operation interface of a mobile terminal in advance;

Presetting to generate an automatic focusing and photographing instruction when it is detected that eyes of a photographed person look at a camera by utilizing the eyeball tracking technology after the automatic photographing function of the mobile terminal is initiated;

Detecting whether the eyes of the photographed person have been looking at the camera by utilizing the eyeball tracking technology when the automatic photographing function of the mobile terminal is initiated to proceed autodyning; and

Controlling the camera to focus on a range in which the eyes serving as target points and automatically photographing after a preset countdown is over, when it is detected that the eyes of the photographed person have been looking at the camera.

Preferably, in the processing method for automatically photographing based on the eyeball tracking technology, the step of detecting whether the eyes of the photographed person have been looking at the camera by utilizing the eyeball tracking technology when the automatic photographing function of the mobile terminal is initiated to proceed the autodyning specifically comprises:
Determining whether to choose to activate the automatic photographing function for automatically photographing to autodyne when a photographing function is initiated; and
Detecting whether the eyes of the photographed person have been looking at the camera by utilizing the eyeball tracking technology when the automatic photographing function is chosen.

Preferably, in the processing method for automatically photographing based on the eyeball tracking technology, when it is detected that the eyes of the photographed person have been looking at the camera, the step of controlling the camera to focus on the range in which the eyes serving as the target points and automatically photographing after the preset countdown is over specifically comprises:
Determining whether positions which the eyes of the photographed person look at are in a predetermined range; and
Determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.

Preferably, in the processing method for automatically photographing based on the eyeball tracking technology, the mobile terminal is a cell phone, the camera comprises a front camera and/or a rear camera, and the eyeball tracking technology tracks eyeballs according to characteristic changes of the eyeballs and the periphery of the eyeballs, angle changes of irises, or characteristics collected by actively projecting infrared light to the irises.

The present invention adopts the following technical scheme for solving the technical problems.

A processing method for automatically photographing based on eyeball tracking technology comprises:
A. detecting whether eyes of a photographed person have been looking at a camera by utilizing the eyeball tracking technology when an automatic photographing function of a mobile terminal is initiated to proceed autodyning; and
B. controlling the camera to focus on a range in which the eyes serving as target points and automatically photographing after a preset countdown is over, when it is detected that the eyes of the photographed person have been looking at the camera.

Preferably, before step A, the processing method for automatically photographing based on the eyeball tracking technology further comprises:

Presetting to generate an automatic focusing and photographing instruction when it is detected that the eyes of the photographed person look at the camera by utilizing the eyeball tracking technology after the automatic photographing function of the mobile terminal is initiated.

Preferably, before step A, the processing method for automatically photographing based on the eyeball tracking technology further comprises:

Newly adding a menu item of the automatic photographing function for initiating an eyeball tracking function and a menu item of an automatic photographing countdown setting for setting an autodyne countdown in a camera operation interface of the mobile terminal in advance.

Preferably, in the processing method for automatically photographing based on the eyeball tracking technology, step A specifically comprises:
A1. determining whether to choose to activate the automatic photographing function for automatically photographing to autodyne when a photographing function is initiated; and
A2. detecting whether the eyes of the photographed person have been looking at the camera when the automatic photographing function is chosen.

Preferably, in the processing method for automatically photographing based on the eyeball tracking technology, step B specifically comprises:
B1. determining whether positions which the eyes of the photographed person look at are in a predetermined range; and
B2. determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.

Preferably, in the processing method for automatically photographing based on the eyeball tracking technology, the mobile terminal is a cell phone, the camera comprises a front camera and/or a rear camera, and the eyeball tracking technology tracks the eyeballs according to characteristic changes of the eyeballs and the periphery of the eyeballs, angle changes of irises, or characteristics collected by actively projecting infrared light to the irises in step A.

Preferably, in the processing method for automatically photographing based on the eyeball tracking technology, the preset countdown is three seconds.

A processing system for automatically photographing based on eyeball tracking technology comprises:
A menu setting module for newly adding a menu item of an automatic photographing function for initiating an eyeball tracking function and a menu item of an automatic photographing countdown setting for setting an autodyne countdown in a camera operation interface of a mobile terminal in advance;
A presetting module for presetting to generate an automatic focusing and photographing instruction when it is detected that eyes of a photographed person look at a camera by utilizing the eyeball tracking technology after the automatic photographing function of the mobile terminal is initiated;
An automatic photographing initiation and eyeball detection processing module for detecting whether the eyes of the photographed person have been looking at the camera by utilizing the eyeball tracking technology when the automatic photographing function of the mobile terminal is initiated to proceed autodyning; and
A focusing and photographing module for controlling the camera to focus on a range in which the eyes serving as target points and automatically photographing after a preset countdown is over, when it is detected that the eyes of the photographed person have been looking at the camera.

Preferably, in the processing system for automatically photographing based on the eyeball tracking technology, the mobile terminal is a cell phone, and the camera comprises a front camera and/or a rear camera,
The automatic photographing initiation and eyeball detection processing module comprises:
A first determining unit for determining whether to choose to activate the automatic photographing function for automatically photographing to autodyne when a photographing function is initiated;
A detection processing unit for detecting whether the eyes of the photographed person have been looking at the camera by utilizing the eyeball tracking technology when the automatic photographing function is chosen;
An eyeball tracking processing unit for tracking eyeballs according to characteristic changes of eyeballs and the periphery of the eyeballs, angle changes of irises, or characteristics collected by actively projecting infrared light to the irises.

Preferably, in the processing system for automatically photographing based on the eyeball tracking technology, the focusing and photographing module comprises:
A second determining unit for determining whether positions which the eyes of the photographed person look at are in a predetermined range;
A focusing and automatic photographing unit for determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.

### Advantageous Effects of the Invention

### Advantageous Effects

In the processing method and system for automatically photographing based on the eyeball tracking technology provided by the present invention, the mobile terminal has a new function which implements the automatic photographing by utilizing the eyeball tracking technology. When the photographed person looks at the camera, the mobile terminal can detect the eye behavior of the photographed person and then photograph automatically in a preset time. Accordingly, the photographed person can decrease the manual operations, such that the automatic photographing is fast and convenient. The mobile terminal can focus and photograph automatically with the front and/or rear cameras by utilizing the eyeball tracking technology and provide convenience for the photographed person.

### BRIEF DESCRIPTION OF THE DRAWINGS

### Description of the Drawings

FIG. 1 is a flowchart of a processing method for automatically photographing based on eyeball tracking technology in accordance with a first preferred embodiment of the present invention.
FIG. 2 is a flowchart of a processing method for automatically photographing based on eyeball tracking technology in accordance with a second preferred embodiment of the present invention.
FIG. 3 is a functional block diagram of a processing system for automatically photographing based on eyeball tracking technology in accordance with a preferred embodiment of the present invention.

### BEST EMBODIMENT FOR CARRYING OUT THE INVENTION

### BEST MODE FOR CARRYING OUT THE INVENTION

For a better understanding of the aforementioned content of the present invention, preferable embodiments are illustrated in accordance with the attached figures for further explanation. It should be understood that specific embodiments described herein are merely intended to explain the present invention, but are not intended to limit the present invention.

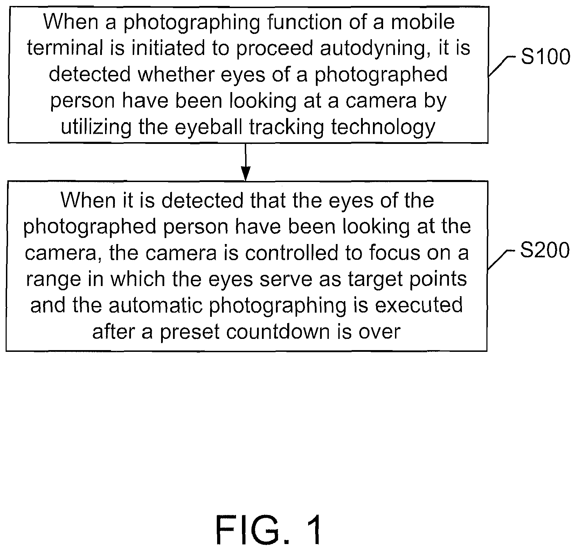

Please refer to FIG. 1, which is a flowchart of a processing method for automatically photographing based on eyeball tracking technology in accordance with a first preferred embodiment of the present invention. As shown in FIG. 1, the processing method for photographing automatically based on the eyeball tracking technology comprises the following steps.

In step S100, when a photographing function of a mobile terminal is initiated to proceed autodyning, it is detected whether eyes of a photographed person have been looking at a camera by utilizing the eyeball tracking technology.

In the present embodiment of the present invention, photographing is implemented via the camera of the mobile terminal, which has a photographing function. When the automatic photographing function of the mobile terminal is initiated, it is detected whether the eyes of the photographed person have been looking at the camera by utilizing the eyeball tracking technology.

The eyeball tracking technology can detect whether the eyes of the photographed person have been looking at the camera by tracking the eyeballs according to characteristic changes of eyeballs and the periphery of the eyeballs, angle changes of irises, or characteristics collected by actively projecting infrared light to the irises. Specific eyeball tracking technology is prior art and not repeated herein.

The camera of the mobile terminal can tract the eyeballs of the photographed person via the eyeball tracking technology. When it is detected that the eyes of the photographed person have been looking at the camera, go to step S200.

In step S200, when it is detected that the eyes of the photographed person have been looking at the camera, the camera is controlled to focus on a range in which the eyes serve as target points and the automatic photographing is executed after a preset countdown is over.

In the present invention, when it is detected that the eyes of the photographed person have been looking at the camera, the camera is controlled to focus on the designated range (e.g. a range that the camera can capture) in which the eyes serve as the target points and the automatic photographing is executed after the preset countdown (e.g. three seconds) is over.

When one person's view falls into another person's eyes, the one person can appreciate that the another person looks at himself/herself. Similarly, a device with a camera also can appreciate that someone looks at the camera by the eyeball tracking technology, and thus the camera is ready to photograph. The present invention implements the automatic photographing function via human-computer interaction. When the photographed person utilizes the mobile terminal to photograph automatically, the photographed person can choose whether to initiate the automatic photographing function. When the automatic photographing function is chosen, the mobile terminal detects, via the camera, whether the eyes of the photographed person have been looking at the camera. When it is detected that the eyes of the photographed person have been looking at the camera, the range in which the eyes serve as the target points is focused firstly. Then, the automatic photographing is executed after the preset countdown is over. In the present embodiment, the mobile terminal may be a cell phone, and the camera may comprise a front camera or a rear camera of the cell phone. Certainly, in another embodiment, the camera may comprise an external USB camera and is not limited herein.

As such, when the photographed person photographs via the front camera or the rear camera, the photographed person can directly strike a pose. Then, when the eyes look at the camera, the automatic photographing can be executed without manually photographing, so as to provide convenience for the photographed person. The photographed person can strike a pose freely.

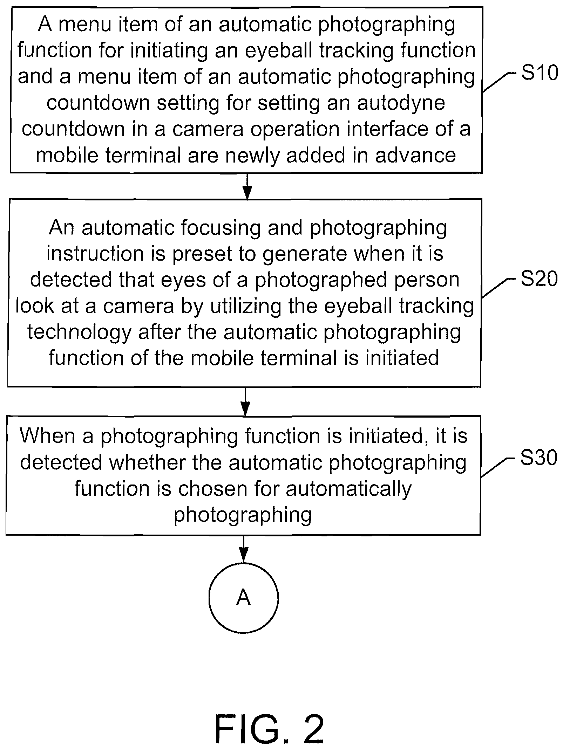

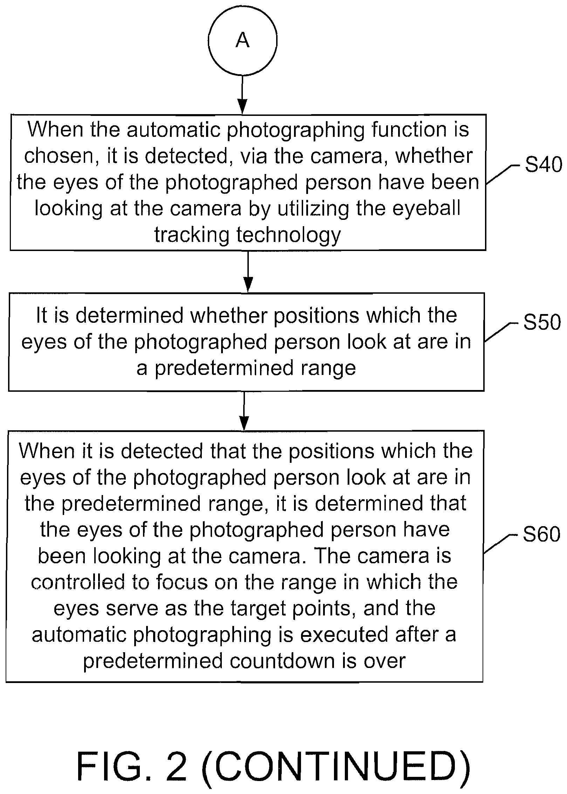

Please refer to FIG. 2, which is a flowchart of a processing method for automatically photographing based on eyeball tracking technology in accordance with a second preferred embodiment of the present invention. As shown in FIG. 2, the processing method for automatically photographing based on the eyeball tracking technology comprises the following steps.

In step S10, a menu item of an automatic photographing function for initiating an eyeball tracking function and a menu item of an automatic photographing countdown setting for setting an autodyne countdown in a camera operation interface of a mobile terminal are newly added in advance.

In the specific embodiment of the present invention, two operational menus are required to be newly added in the camera operation interface of the mobile terminal. One is the menu item of the automatic photographing function for initiating the eyeball tracking function, and the other is the menu item of the automatic photographing countdown setting for setting the autodyne countdown.

In step S20, an automatic focusing and photographing instruction is preset to generate when it is detected that eyes of a photographed person look at a camera by utilizing the eyeball tracking technology after the automatic photographing function of the mobile terminal is initiated.

The automatic focusing and photographing instruction is preset to generate when it is detected that the eyes of the photographed person look at the camera by utilizing the eyeball tracking technology after the automatic photographing function of the mobile terminal is initiated. That is, detecting that the eyes of the photographed person look at the camera by utilizing the eyeball tracking technology corresponds to the automatic focusing and photographing instruction of the automatic photographing function of the mobile terminal.

In step S30, when a photographing function is initiated, it is detected whether the automatic photographing function is chosen for automatically photographing.

In the present embodiment, the photographing function is initiated firstly. In the camera operation interface of the mobile terminal, the menu item of the automatic photographing function and the menu item of the automatic photographing countdown setting are newly added. The photographed person can initiate the eyeball tracking function by choosing the automatic photographing function to detect whether the view of the photographed person falls into the position of the camera. The automatic photographing is executed when the view of the photographed person falls into a range of the position of the camera.

In step S40, when the automatic photographing function is chosen, it is detected, via the camera, whether the eyes of the photographed person have been looking at the camera by utilizing the eyeball tracking technology.

In the present embodiment of the present invention, when the automatic photographing function is initiated, it is detected whether the eyes of the photographed person have been looking at the camera by utilizing the eyeball tracking technology firstly. Currently, three schemes for implementing the eyeball tracking technology include tracking the eyeballs according to characteristic changes of eyeballs and the periphery of the eyeballs, angle changes of irises, or characteristics collected by actively projecting infrared light to the irises.

In step S50, it is determined whether positions which the eyes of the photographed person look at are in a predetermined range.

In step S60, when it is detected that the positions which the eyes of the photographed person look at are in the predetermined range, it is determined that the eyes of the photographed person have been looking at the camera. The camera is controlled to focus on the range in which the eyes serve as the target points, and the automatic photographing is executed after a predetermined countdown is over.

The positions which the eyes of the photographed person look at are in the predetermined range, which is a range that the camera can capture. The preset countdown is three seconds.

In the present embodiment, when a front camera is utilized for photographing, the view of the photographed person falling into a screen of the mobile terminal can be positioned by utilizing the eyeball tracking technology. As long as the view falls into the range which centers in the camera, the screen displays that the eyes of the photographed person have been looking at the camera. Accordingly, when it is determined whether the eyes of the photographed person have been looking at the camera, the view is not limited to an accurate position of the camera. The range can be extended when the screen displays that the eyes of the photographed person have been looking at the camera. The extended range can serve as an effective range in which it is determined that the eyes of the photographed person have been looking at the camera. When the view falls into the extended range, the mobile terminal automatically focuses and photographs after the automatic photographing countdown is over.

The principle for implementing the automatic photographing by utilizing the rear camera is the same as that for implementing the automatic photographing by utilizing the front camera except a projection position and an effective range of the view on a rear screen are determined by the rear camera. An effective range is determined when the eyes of the photographed person have been looking at a range which centers in the rear camera and the screen displays that the eyes of the photographed person have been looking the rear camera. The effective range is the range in which the eyes of the photographed person look at the rear camera.

It can be seen from the above that the embodiment of the present invention provides the processing method for automatically photographing based on the eyeball tracking technology. The method can automatically focus and photograph with the front and/or rear cameras by utilizing the eyeball tracking technology, so as to provide convenience for the photographed person.

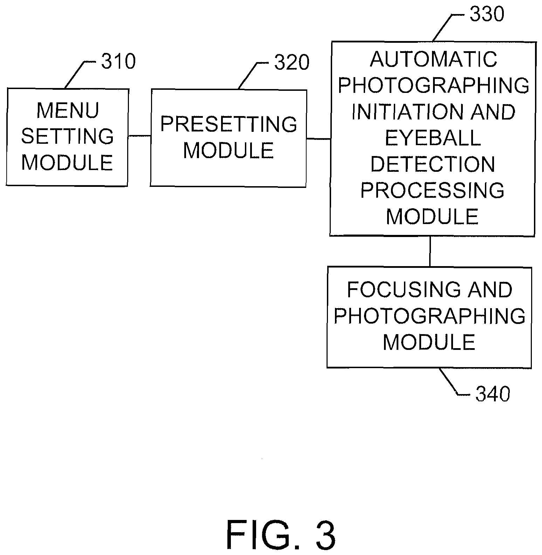

Based on the above-mentioned embodiment, the present invention further provides a processing system for automatically photographing based on eyeball tracking technology. As shown in FIG. 3, the processing system comprises the following modules.

A menu setting module 310 is utilized for newly adding a menu item of an automatic photographing function for initiating an eyeball tracking function and a menu item of an automatic photographing countdown setting for setting an autodyne countdown in a camera operation interface of a mobile terminal in advance. The embodiment is described above.

A presetting module 320 is utilized for presetting to generate an automatic focusing and photographing instruction when it is detected that eyes of a photographed person look at a camera by utilizing the eyeball tracking technology after the automatic photographing function of the mobile terminal is initiated. The embodiment is described above.

An automatic photographing initiation and eyeball detection processing module 330 is utilized for detecting whether the eyes of the photographed person look at the camera by utilizing the eyeball tracking technology when the automatic photographing function of the mobile terminal is initiated to proceed autodyning. The embodiment is described above.

A focusing and photographing module 340 is utilized for controlling the camera to focus on a range in which the eyes serve as target points and automatically photographing after a preset countdown is over, when it is detected that the eyes of the photographed person have been looking at the camera. The embodiment is described above.

In the processing system for automatically photographing based on the eyeball tracking technology, the mobile terminal may be a cell phone, and the camera may comprise a front camera and/or a rear camera of the cell phone. The automatic photographing initiation and eyeball detection processing module 330 comprises the following units.

A first determining unit is utilized for determining whether to choose to activate the automatic photographing function for automatically photographing when a photographing function is initiated. The embodiment is described above.

A detection processing unit is utilized for detecting whether the eyes of the photographed person have been looking at the camera by utilizing the eyeball tracking technology when the automatic photographing function is chosen. The embodiment is described above.

An eyeball tracking processing unit is utilized for tracking eyeballs according to characteristic changes of eyeballs and the periphery of the eyeballs, angle changes of irises, or characteristics collected by actively projecting infrared light to the irises. The embodiment is described above.

In the processing system for automatically photographing based on the eyeball tracking technology, the focusing and photographing module 340 comprises the following units.

A second determining unit is utilized for determining whether positions which the eyes of the photographed person look at are in a predetermined range. The embodiment is described above.

A focusing and automatic photographing unit is utilized for determining that the eyes of the photographed person have been looking at the camera when it is detected that the positions which the eyes of the photographed person look at are in the predetermined range, controlling the camera to focus on the range in which the eyes serve as the target points, and to execute automatically photographing after the preset countdown is over, when it is detected that the positions which the eyes of the photographed person look at are in the predetermined range. The embodiment is described above.

It is noted that the processing method for automatically photographing based on the eyeball tracking technology of the present embodiment may be applied to a mobile terminal, such as a cell phone, a tablet PC, a notebook, and so on. Certainly, the processing system may also be applied to a functional terminal, such as a desktop computer, a camera, and so on.

In summary, in the processing method and system for automatically photographing based on the eyeball tracking technology provided by the present invention, the mobile terminal has a new function which implements the automatic photographing by utilizing the eyeball tracking technology. When the photographed person looks at the camera, the mobile terminal can detect the eye behavior of the photographed person and then photograph automatically in a preset time. Accordingly, the photographed person can decrease the manual operations, such that the automatic photographing is fast and convenient. The mobile terminal can focus and photograph automatically with the front and/or rear cameras by utilizing the eyeball tracking technology and provide convenience for the photographed person.

As is understood by a person skilled in the art, the foregoing preferred embodiments of the present invention are illustrative rather than limiting of the present invention. It is intended that various modifications and similar arrangements are to be included within the spirit and scope of the appended claims, the scope of which should be accorded the broadest interpretation so as to encompass all such modifications and similar structures.

## Claims

1. A processing method for automatically photographing based on eyeball tracking technology, comprising:
newly adding a menu item of an automatic photographing function for initiating an eyeball tracking function and a menu item of an automatic photographing countdown setting for setting an autodyne countdown in a camera operation interface of a mobile terminal in advance;
presetting to generate an automatic focusing and photographing instruction when it is detected that eyes of a photographed person look at a camera by utilizing the eyeball tracking technology after the automatic photographing function of the mobile terminal is initiated;
detecting whether the eyes of the photographed person have been looking at the camera by utilizing the eyeball tracking technology when the automatic photographing function of the mobile terminal is initiated to proceed autodyning; and
controlling the camera to focus on a range in which the eyes serving as target points and automatically photographing after a preset countdown is over, when it is detected that the eyes of the photographed person have been looking at the camera.

2. The processing method for automatically photographing based on the eyeball tracking technology of claim 1, wherein the step of detecting whether the eyes of the photographed person have been looking at the camera by utilizing the eyeball tracking technology when the automatic photographing function of the mobile terminal is initiated to proceed the autodyning specifically comprises:
determining whether to choose to activate the automatic photographing function for automatically photographing to autodyne when a photographing function is initiated; and
detecting whether the eyes of the photographed person have been looking at the camera by utilizing the eyeball tracking technology when the automatic photographing function is chosen.

3. The processing method for automatically photographing based on the eyeball tracking technology of claim 2, wherein when it is detected that the eyes of the photographed person have looking at the camera, the step of controlling the camera to focus on the range in which the eyes serving as the target points and automatically photographing after the preset countdown is over specifically comprises:
determining whether positions which the eyes of the photographed person look at are in a predetermined range; and
determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.

4. The processing method for automatically photographing based on the eyeball tracking technology of claim 3, wherein the mobile terminal is a cell phone, the camera comprises a front camera and/or a rear camera, and the eyeball tracking technology tracks eyeballs according to characteristic changes of the eyeballs and the periphery of the eyeballs, angle changes of irises, or characteristics collected by actively projecting infrared light to the irises.

5. A processing method for automatically photographing based on eyeball tracking technology, comprising:
detecting whether eyes of a photographed person have been looking at a camera by utilizing the eyeball tracking technology when an automatic photographing function of a mobile terminal is initiated to proceed autodyning; and
controlling the camera to focus on a range in which the eyes serving as target points and automatically photographing after a preset countdown is over, when it is detected that the eyes of the photographed person have been looking at the camera.

6. The processing method for automatically photographing based on the eyeball tracking technology of claim 5, further comprising:
presetting to generate an automatic focusing and photographing instruction when it is detected that the eyes of the photographed person look at the camera by utilizing the eyeball tracking technology after the automatic photographing function of the mobile terminal is initiated.

7. The processing method for automatically photographing based on the eyeball tracking technology of claim 5, further comprising:
newly adding a menu item of the automatic photographing function for initiating an eyeball tracking function and a menu item of an automatic photographing countdown setting for setting an autodyne countdown in a camera operation interface of the mobile terminal in advance.

8. The processing method for automatically photographing based on the eyeball tracking technology of claim 5, wherein the step of detecting whether the eyes of the photographed person have been looking at the camera by utilizing the eyeball tracking technology when the automatic photographing function of the mobile terminal is initiated to proceed the autodyning specifically comprises:
determining whether to choose to activate the automatic photographing function for automatically photographing to autodyne when a photographing function is initiated; and
detecting whether the eyes of the photographed person have been looking at the camera when the automatic photographing function is chosen.

9. The processing method for automatically photographing based on the eyeball tracking technology of claim 8, wherein when it is detected that the eyes of the photographed person have been looking at the camera, the step of controlling the camera to focus on the range in which the eyes serving as the target points and automatically photographing after the preset countdown is over specifically comprises:
determining whether positions which the eyes of the photographed person look at are in a predetermined range; and
determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.

10. The processing method for automatically photographing based on the eyeball tracking technology of claim 9, wherein the mobile terminal is a cell phone, the camera comprises a front camera and/or a rear camera, and the eyeball tracking technology tracks the eyeballs according to characteristic changes of the eyeballs and the periphery of the eyeballs, angle changes of irises, or characteristics collected by actively projecting infrared light to the irises.

11. The processing method for automatically photographing based on the eyeball tracking technology of claim 5, wherein the preset countdown is three seconds.

12. A processing system for automatically photographing based on eyeball tracking technology, comprising:
a menu setting module for newly adding a menu item of an automatic photographing function for initiating an eyeball tracking function and a menu item of an automatic photographing countdown setting for setting an autodyne countdown in a camera operation interface of a mobile terminal in advance;
a presetting module for presetting to generate an automatic focusing and photographing instruction when it is detected that eyes of a photographed person look at a camera by utilizing the eyeball tracking technology after the automatic photographing function of the mobile terminal is initiated;
an automatic photographing initiation and eyeball detection processing module for detecting whether the eyes of the photographed person have been looking at the camera by utilizing the eyeball tracking technology when the automatic photographing function of the mobile terminal is initiated to proceed autodyning; and
a focusing and photographing module for controlling the camera to focus on a range in which the eyes serving as target points and automatically photographing after a preset countdown is over, when it is detected that the eyes of the photographed person have been looking at the camera.

13. The processing system for automatically photographing based on the eyeball tracking technology of claim 12, wherein the mobile terminal is a cell phone, the camera comprises a front camera and/or a rear camera, and the automatic photographing initiation and eyeball detection processing module comprises:
a first determining unit for determining whether to choose to activate the automatic photographing function for automatically photographing to autodyne when a photographing function is initiated;
a detection processing unit for detecting whether the eyes of the photographed person have been looking at the camera by utilizing the eyeball tracking technology when the automatic photographing function is chosen; and
an eyeball tracking processing unit for tracking eyeballs according to characteristic changes of eyeballs and the periphery of the eyeballs, angle changes of irises, or characteristics collected by actively projecting infrared light to the irises.

14. The processing system for automatically photographing based on the eyeball tracking technology of claim 12, wherein the focusing and photographing module comprises:
a second determining unit for determining whether positions which the eyes of the photographed person look at are in a predetermined range; and
a focusing and automatic photographing unit for determining that the eyes of the photographed person have been looking at the camera when it is detected that the positions which the eyes of the photographed person look at are in the predetermined range, controlling the camera to focus on the range in which the eyes serving as the target points, and to execute automatically photographing after the preset countdown is over.
